# NEUE EUROPÄISCHE PATENTSCHRIFT

(11) **EP 3 555 503 B2**
(45) Veröffentlichungstag und Bekanntmachung des Hinweises auf die Entscheidung über den Einspruch: **02.10.2024**
(45) Hinweis auf die Patenterteilung: 04.08.2021
(21) Anmeldenummer: 17803939.2
(22) Anmeldetag: 23.11.2017
(51) Int. Cl.: F16J 15/3228, F16J 15/3244

(54) **VORRICHTUNG ZUR ABDICHTUNG EINES GEGENSTANDS**
DEVICE FOR SEALING AN OBJECT
DISPOSITIF POUR ASSURER L'ÉTANCHÉITÉ D'UN OBJET

(30) Priorität: 15.12.2016 DE 102016124457
(43) Veröffentlichungstag der Anmeldung: 23.10.2019
(73) Patentinhaber: Universität Stuttgart, 70174 Stuttgart (DE)
(72) Erfinder: HÖRL, Lothar, 74321 Bietigheim-Bissingen (DE); DAKOV, Nino, 70176 Stuttgart (DE); STOLL, Mario, 70193 Stuttgart (DE); BAUER, Frank, 70771 Leinfelden-Echterdingen (DE)
(74) Vertreter: Schmid, Wolfgang
(86) Internationale Anmeldenummer: PCT/EP2017/080186
(87) Internationale Veröffentlichungsnummer: WO 2018/108478

(56) Entgegenhaltungen:
- EP-A1- 0 352 118
- EP-A2- 2 618 032
- DE-A1- 10 000 853
- DE-A1- 102013 207 029
- DE-A1- 19 740 821
- DE-A1- 3 501 065
- DE-C- 655 777
- DE-C2- 2 556 992
- JP-A- 2000 310 341
- JP-A- 2005 003 055
- JP-A- 2007 162 801
- JP-A- H0 835 564
- JP-A- H11 351 405
- US-A- 3 515 395
- US-A- 3 861 691
- US-A1- 2007 187 904
- US-A1- 2014 110 904

## Beschreibung

Die Erfindung betrifft eine Vorrichtung zur Abdichtung eines abzudichtenden Gegenstands, insbesondere zur Abdichtung einer rotierenden Welle, mit einem Dichtkörper, der eine dem abzudichtenden Gegenstand zugewandte Dichtseite und eine von dem abzudichtenden Gegenstand abgewandte Rückseite aufweist, nach der im Oberbegriff des Anspruchs 1 näher definierten Art.

Aus dem Stand der Technik sind die unterschiedlichsten Ausführungsformen von solchen Dichtvorrichtungen bekannt. Nachfolgend wird auf einige dieser bekannten Vorrichtungen näher eingegangen. Eine gattungsgemäße Vorrichtung ist aus der JP 2007-162801 A bekannt.

In der DE 10 2007 036 625 A1 ist ein ähnliches Dichtelement zum Abdichten einer rotierenden Welle an einer Durchtrittsöffnung eines Gehäuseteils mit einem Versteifungsteil und einem mit dem Versteifungsteil verbundenen Elastomerteil beschrieben, das einen ersten Dichtbereich für ein statisch abdichtendes Anliegen am Gehäuseteil und das einen zweiten Dichtbereich mit einem zum abdichtenden Anliegen an der Welle ausgebildeten und vorgesehenen Dichtabschnitt aufweist, der für ein Rückfördern eines Leckagefluids in einen abzudichtenden Raum eine gewindeartige Rückförderstruktur umfasst.

Die DE 10 2010 042 555 A1 beschreibt einen Radialwellendichtring, der einen Versteifungsring und ein mit dem Versteifungsring verbundenes Elastomerteil aufweist, das eine Dichtlippe mit einem ersten, zum Rückfördern eines Leckagefluids bei einer sich drehenden Welle mit einer gewindeartigen Rückförderstruktur versehenen Dichtabschnitt und einem zweiten Dichtabschnitt aufweist, der zum gasdichten Anliegen an einer stehenden Welle eine kreiszylindermantelförmige Dichtfläche aufweist, die wiederum eine Mikrostruktur aufweist.

Aus der DE 10 2010 061 819 A1 ist ein Radialwellendichtring mit einem Versteifungsring und einem mit dem Versteifungsring verbundenen Elastomerteil bekannt, das eine dynamische Dichtlippe mit einem radialen Dichtlippenabschnitt und einem axialen Dichtlippenabschnitt aufweist, wobei der axiale Dichtlippenabschnitt für ein abdichtendes Anliegen an einer Welle eine Dichtkante aufweist, die an einer der Welle zugewandten inneren Mantelwand des axialen Dichtlippenabschnitts angeordnet ist.

Die WO 2012/095227 A1 beschreibt einen Radialwellendichtring mit einem Verstärkungsring und einem mit dem Verstärkungsring verbundenen Elastomerteil, das eine dynamische Dichtlippe trägt, die eine an einer von dem Radialwellendichtring abgedichteten Welle anliegende Dichtkante aus PTFE aufweist.

Aus der DE 10 2010 026 157 A1 ist eine Triebwelle einer Axialkolbenmaschine bekannt, die mittels eines Radialwellendichtsystems abgedichtet ist, welches einen Radialwellendichtring und eine Gegenlauffläche aufweist, deren Oberfläche eine hydrodynamische, mit einer harten, diamantähnlichen Oberflächenbeschichtung versehene Rückförderstruktur aufweist.

Ein Ausrücklager einer als Membranfederkupplung ausgebildeten Reibungskupplung ist in der DE 10 2009 049 466 A1 beschrieben. Dieses weist einen mit Lagerfett gefüllten Lagerinnenraum auf, der axial mit einer Dichtung abgeschlossen ist, die starr an dem Lageraußenring befestigt ist und mit der Dichtkante einer Dichtlippe an einer Dichtfläche des Lagerinnenrings anliegt. Zur Erhöhung der Dichtwirkung ist die Dichtlippe der Dichtung mit einer axial benachbart zu der Dichtkante angeordneten und mit der zugeordneten Dichtfläche in Wirkverbindung stehenden, ringförmig angeordneten Rückförderstruktur versehen.

Eine Gleitringdichtung zum Abdichten der Durchtrittsstelle einer umlaufenden Welle durch eine Wand ist aus der EP 0 592 462 B1 bekannt. Die Gleitringdichtung weist Rückförderstrukturen auf, die mehrere an geometrisch definierten Positionen liegende Rückförderpunkte aufweist.

Die DE 101 09 320 A1 beschreibt einen Radialwellendichtring mit einem Dichtelement aus Kunststoff, insbesondere aus PTFE-Compound, das eine Dichtlippe aufweist, die mit einem Abschnitt an der Oberfläche einer Welle zur Mediumseite hin abdichtend anliegt. Auf der Mediumseite der Dichtlippe ist eine Andrückvorrichtung vorgesehen, die den Abschnitt der Dichtlippe an die Oberfläche der Welle mit einer radial einwärts gerichteten Kraft angedrückt hält.

In der DE 10 2005 037 568 A1 ist ein Elastomer-Wellendichtring beschrieben, bei dem die Rückseite des Dichtbereichs nicht glatt gestaltet ist.

Aus der DE 102 33 396 A1 ist eine Wellendichtung mit mehreren Lippen bekannt, bei der eine der Lippen konkave Ausnehmungen aufweist.

Die US 2014/110904 A1 zeigt eine dynamische Lippendichtung zum Abdichten zwischen einem Gehäuse und einer Welle. Die Dichtung umfasst eine Dichtungslippe, die sich von einem Dichtungskörper erstreckt und einen Wellenkontaktabschnitt umfasst, der zum Eingriff mit der Welle ausgelegt ist. Des Weiteren sind Spiralnuten vorgesehen mit denen, je nach Drehrichtung der Welle, Öl in unterschiedliche Richtungen gepumpt werden kann.

Die JP 2000 310341 A beschreibt eine Dichtung mit einem schraubenartigen Vorsprung, der so ausgebildet ist, dass er eine Pumpfunktion von einer Atmosphärenseite zu einer abzudichtenden Seite aufweist.

Die DE 100 00 853 A1 zeigt einen Dichtring, der eine in Richtung der abzudichtenden Zone gekrümmte Dichtlippe mit einer Öffnung auf der von der Maschineneinheit abgewandten Radialseite aufweist.

Die in der EP 0 352 118 A1 beschriebene Dichtung umfasst einen Basisabschnitt aus einem ersten Material, beispielsweise einem Elastomer; und einen Auskleidungsabschnitt aus einem zweiten Material, beispielsweise PTFE, der einen abdichtenden Kontakt mit einer Welle bildet und der eine Reihe von darin ausgebildeten Öffnungen bzw. Vertiefungen aufweist.

Die JP H11 351405 A beschreibt eine Dichtungsvorrichtung zur Abdichtung zwischen zwei Elementen, die relativ zueinander drehbar und konzentrisch angeordnet sind.

Die JP H08 35564 A beschreibt ein Herstellungsverfahren für eine ringförmige Dichtung.

In der EP 2 618 032 A2 ist eine Wellendichtung beschrieben, die ein Dichtelement aufweist, das mit einer Dichtlippe versehen ist, die an einer unter Radialkraft abzudichtenden Fläche anliegt. Die Dichtlippe wird durch ein Elastomerelement in Richtung der abzudichtenden Oberfläche belastet. In der US 2007/0187904 A1 ist eine bidirektionale dynamische Dichtung beschrieben, die für die Rückführung von Schmiermittel zur Schmiermittelseite unabhängig von einer Richtung der relativen Drehung zwischen der Dichtung und der Welle sorgt. Die Dichtung verwendet ein Muster symmetrischer Pumpelemente, um das hydrodynamische Pumpen des eingefangenen Schmiermittels als Reaktion auf die Relativdrehung zu erleichtern.

Die bekannten Radialwellendichtringe sind demnach häufig mit sogenannten Rückförderstrukturen versehen, die bewirken sollen, dass durch die rotierende Welle mitgeschlepptes Fluid axial in Richtung der Medienseite bzw. der abzudichtenden Seite umgelenkt wird, sodass sich eine Rückförderung des Fluids und damit eine Abdichtung im dynamischen Zustand ergibt. Dieses Prinzip funktioniert bei aus Gummi bestehenden Radialwellendichtringen teilweise auch ohne explizit geschaffene Rückförderstrukturen, da Gummimaterial diese Strukturen aufgrund der Reibung selbst bildet.

Die bekannten, mit solchen Rückförderstrukturen auf der dem abzudichtenden Gegenstand zugewandten Dichtseite versehenen Dichtringe oder die Dichtringe, bei denen sich die Rückförderstrukturen von selbst ausbilden, bestehen meist aus einem auf Gummi basierenden Werkstoff. Problematisch bei Gummidichtringen ist jedoch die Tatsache, dass diese bei den teilweise erforderlichen hohen Anpresskräften durch die Reibung mit der rotierenden Welle sehr heiß werden und beschädigt werden können.

Aus diesem Grund wird teilweise versucht, Dichtringe aus anderen, insbesondere wärmebeständigeren Werkstoffen, wie beispielsweise Polytetrafluoräthylen, einzusetzen. Auch hierzu sind oben Beispiele beschrieben. Da die aus diesen Werkstoffen bestehenden Dichtungen zwar thermisch und chemisch beständiger, jedoch auch wesentlich härter als Gummidichtringe sind, entstehen diese Rückförderstrukturen bei diesen Dichtringen nicht von selbst, sondern müssen in dieselben eingearbeitet werden, was zu sehr hohen fertigungs- und montagetechnischen Anforderungen führt. Außerdem kann es durch die höhere Härte dieses Materials dazu kommen, dass die Dichtseite bzw. die Kontaktfläche auch bei verhältnismäßig geringen geometrischen Abweichungen vom Sollzustand möglicherweise nicht vollständig an dem abzudichtenden Gegenstand anliegt und dadurch keine optimale Dichtigkeit erreicht wird.

Gemäß dem Stand der Technik werden bei solchen PTFE-Dichtringen teilweise Spiralrillen eingesetzt, mit denen das Fluid zurückgefördert werden soll. Zwar wirken diese Spiralrillen bei rotierenden Wellen, also im Falle einer dynamischen Abdichtung, recht gut, bei stehender Welle, also im Falle einer statischen Abdichtung, kann es jedoch zu Leckagen kommen, da das Fluid durch die Spiralrillen von der Fluid- bzw. Medienseite auf die Luftseite gelangen kann.

Es ist daher Aufgabe der vorliegenden Erfindung, eine Vorrichtung zur Abdichtung eines abzudichtenden Gegenstands, insbesondere zur Abdichtung einer rotierenden Welle, zu schaffen, die in den unterschiedlichsten Betriebszuständen eine zuverlässige Abdichtung gewährleistet.

Erfindungsgemäß wird diese Aufgabe durch die in Anspruch 1 genannten Merkmale gelöst.

Durch das erfindungsgemäße, auf der Rückseite des Dichtkörpers angeordnete, die Steifigkeit desselben verändernde Element wird eine ungleichmäßige Verteilung der Flächenpressung im Dichtspalt zwischen dem Dichtkörper der erfindungsgemäßen Vorrichtung und dem abzudichtenden Gegenstand erreicht. Durch diese ungleichmäßige Verteilung der Flächenpressung und durch die sich im dynamischen Zustand ergebenden Druckunterschiede innerhalb des Dichtspalts ergeben sich sehr schmale und eng zulaufende Spalte zwischen dem Dichtkörper und dem abzudichtenden Gegenstand, durch die das bei rotierender Welle mitgeschleppte Fluid in axialer Richtung abgelenkt wird und dadurch auf die Fluid- bzw. Medienseite zurückgefördert werden kann. Durch die entstehende Rückpumpwirkung des gezielt abgelenkten Fluids in Richtung Fluid- bzw. Medienseite ergibt sich ein dynamischer Abdichteffekt.

Die beschriebene Spaltbildung zwischen dem Dichtkörper und dem abzudichtenden Gegenstand kann sich auch erst im dynamischen Zustand, also beispielsweise bei einer Rotation der Welle, ergeben. Dadurch kann eine sehr wirkungsvolle Abdichtung im dynamischen Anwendungsfall mit relativ geringem konstruktivem Aufwand erreicht werden.

Durch die erfindungsgemäße Anordnung des die Steifigkeit des Dichtkörpers verändernden Elements auf der Rückseite des Dichtkörpers, also auf der der Dichtseite gegenüberliegenden Seite desselben, wird die Oberfläche der Dichtseite selbst nicht verändert, sodass diese im statischen Anwendungsfall, also beispielsweise im ausgeschalteten Zustand einer mit der erfindungsgemäßen Vorrichtung ausgestatteten Maschine, vollständig an dem abzudichtenden Gegenstand anliegt und eine hohe Dichtigkeit erreicht wird.

Die erfindungsgemäße Lösung lässt sich aufgrund ihres einfachen konstruktiven Aufbaus für die unterschiedlichsten Einsatzzwecke verwenden, da sie problemlos an die jeweiligen Anforderungen angepasst werden kann.

Dadurch, dass das wenigstens eine die Steifigkeit des Dichtkörpers verändernde Element schräg zu einer Längsachse des Dichtkörpers verläuft, wird dem Fluidstrom eine Richtung von der Umfangskante weg gegeben. Mit der Angabe "schräg zu einer Längsachse des Dichtkörpers" ist sowohl ein gerader als auch ein bogenförmiger bzw. gekrümmter Verlauf des die Steifigkeit des Dichtkörpers verändernden Elements umfasst. Die Draufsicht des Dichtsystems wird dabei so definiert, dass die Umfangskante des Dichtkörpers rechtwinklig zur Längsachse des Dichtkörpers verläuft.

Erfindungsgemäß sind mehrere die Steifigkeit des Dichtkörpers verändernde Elemente um den Umfang des Dichtkörpers verteilt angeordnet. Dadurch lässt sich eine gleichmäßige Abdichtwirkung um den gesamten Umfang des abzudichtenden Gegenstands erreichen, was insbesondere im Falle einer rotierenden Welle von Vorteil ist.

Erfindungsgemäß ist des Weiteren vorgesehen, dass die die Steifigkeit des Dichtkörpers verändernden Elemente durch eine Änderung der Materialstärke des Dichtkörpers gebildet ist.

Eine für die Praxis besonders relevante Ausgestaltung besteht erfindungsgemäß darin, dass die die Steifigkeit des Dichtkörpers verändernden Elemente als Vertiefung oder als Erhöhung ausgebildet ist. Derartige Vertiefungen lassen sich bereits bei der Herstellung des Dichtkörpers in denselben einbringen und stellen demnach nur einen sehr geringen Fertigungsaufwand dar. Auch Erhöhungen lassen sich bereits bei der Herstellung des Dichtkörpers erzeugen und wirken sich in der gewünschten Weise auf die zwischen dem Dichtkörper und dem abzudichtenden Gegenstand vorhandene Flächenpressung aus.

Dadurch, dass erfindungsgemäß der Dichtkörper auf der Dichtseite im Wesentlichen glatt ausgebildet ist, ergibt sich zum einen eine fertigungstechnisch einfache Ausführungsform und es ist zum anderen eine gute Grundabdichtung der abzudichtenden Stelle gewährleistet. Mit der Angabe "glatt" ist eine solche Ausführung der Fläche auf der Dichtseite des Dichtkörpers gemeint, die keine ein- oder aufgebrachten Strukturen aufweist. Im Prinzip handelt es sich also um eine in ihrem ursprünglichen Zustand ebene bzw. flache Dichtseite, wobei die sich durch den Einsatz bzw. die Montage ergebende Krümmung bzw. Biegelinie des Dichtkörpers nicht berücksichtigt wird. Es ist erfindungsgemäß und mit der Angabe "schräg zu einer Längsachse des Dichtkörpers" gemeint, dass die die Steifigkeit des Dichtkörpers verändernden Elemente in der Draufsicht in einem Winkel zwischen 0,1° und 89,9° oder zwischen -89,9° und -0,1° schräg zu der Längsachse des Dichtkörpers verlaufen. Auf diese Weise kann eine gewünschte Dichtwirkung durch axiales Umlenken des abzudichtenden Fluids erreicht werden.

Eine Verbesserung der statischen Abdichtung ergibt sich, wenn das wenigstens eine die Steifigkeit des Dichtkörpers verändernde Element einen Abstand von einer Umfangskante des Dichtkörpers aufweist. In diesem Fall bleibt die Umfangskante des Dichtkörpers unverändert und gewährleistet eine wirkungsvolle Abdichtung in sämtlichen Anwendungsfällen. Dieser Abstand ist jedoch nicht zwingend erforderlich und das wenigstens eine die Steifigkeit des Dichtkörpers verändernde Element könnte auch bis zu einer Umfangskante des Dichtkörpers verlaufen.

Wenn in einer weiteren vorteilhaften Ausgestaltung der Erfindung die wenigstens eine Vertiefung einen Höhenverlauf aufweist, so kann dieselbe an unterschiedliche Erfordernisse hinsichtlich der Abdichtung angepasst werden und es lässt sich eine Förderung des Fluids in die gewünschte Richtung erreichen. Grundsätzlich ist ein derartiger Verlauf sowohl in Umfangsrichtung als auch in axialer Richtung denkbar.

Hierbei hat es sich als hinsichtlich der Wirkung des die Steifigkeit des Dichtkörpers verändernden Elements als besonders vorteilhaft erwiesen, wenn die Vertiefung eine Tiefe von 10 bis 90%, vorzugsweise 30 bis 90 %, der Materialstärke des Dichtkörpers aufweist.

Um die Erhöhung an unterschiedliche Erfordernisse hinsichtlich der Abdichtung anpassen zu können, kann vorgesehen sein, dass die wenigstens eine Erhöhung einen Höhenverlauf aufweist. Des Weiteren lässt sich damit eine Förderung des Fluids in die gewünschte Richtung erreichen. Grundsätzlich ist ein derartiger Verlauf sowohl in Umfangsrichtung als auch in axialer Richtung denkbar.

Hierbei kann eine gewünschte Dichtwirkung erreicht werden, wenn die Erhöhung die Materialstärke des Dichtkörpers um 5 bis 100%, vorzugsweise 25 bis 100 %, überschreitet.

Für bestimmte Anwendungen kann es vorteilhaft sein, wenn das wenigstens eine die Steifigkeit des Dichtkörpers verändernde Element aus mehreren geometrischen Grundformen besteht. Diese geometrischen Grundformen können aus einem oder mehreren Schrägen, Bögen, Kreise oder jedweden denkbaren Formen bestehen.

Eine weitere vorteilhafte Ausgestaltung der Erfindung kann darin bestehen, dass wenigstens ein die Steifigkeit des Dichtkörpers veränderndes Element in der Draufsicht mit positivem Winkel schräg zu der Längsachse des Dichtkörpers verläuft und wenigstens ein die Steifigkeit des Dichtkörpers veränderndes Element in der Draufsicht mit negativem Winkel schräg zu der Längsachse des Dichtkörpers entgegengesetzt dazu angeordnet ist. Dies erlaubt die Anpassung der erfindungsgemäßen Vorrichtung an bestimmte Dichtungsanforderungen.

Wenn das wenigstens eine die Steifigkeit des Dichtkörpers verändernde Element zwei Schrägen aufweist, von denen eine in der Draufsicht einen positiven Winkel gegenüber der Längsachse des Dichtkörpers aufweist und von denen die andere in der Draufsicht einen negativen Winkel gegenüber der Längsachse des Dichtkörpers aufweist, so kann eine bei bestimmten Anwendungen vorteilhafte Abdichtung erreicht werden.

Wenn des Weiteren zumindest eines der um den Umfang des Dichtkörpers verteilt angeordneten, die Steifigkeit des Dichtkörpers verändernden Elementen in einer entgegengesetzten Richtung zu den anderen die Steifigkeit des Dichtkörpers verändernden Elementen in der Draufsicht schräg zu der Längsachse des Dichtkörpers verläuft, also einen positiven und einen negativen Winkel aufweist, kann die Vorrichtung für zwei unterschiedliche Drehrichtungen einer rotierenden Welle eingesetzt werden.

Eine hinsichtlich der Förderung des Fluids in die gewünschte Richtung besonders vorteilhafte Ausführungsform der Erfindung ergibt sich, wenn das wenigstens eine die Steifigkeit des Dichtkörpers verändernde Element sich von einer Umfangskante des Dichtkörpers weg verbreitert. Grundsätzlich ist auch ein paralleler Verlauf der beiden seitlichen Ränder des wenigstens einen die Steifigkeit des Dichtkörpers verändernden Elements denkbar.

Des Weiteren kann vorgesehen sein, dass der Dichtkörper Polytetrafluoräthylen aufweist. Da gerade bei PTFE-Dichtungen häufig Probleme hinsichtlich der Rückförderung des Fluids auftreten, ist die erfindungsgemäße Lösung besonders für solche Dichtungen interessant. Grundsätzlich lässt sich die erfindungsgemäße Lösung auch bei anderen üblicherweise für Dichtungen eingesetzten Materialien verwenden. Grundsätzlich lässt sich die erfindungsgemäße Lösung auch bei anderen üblicherweise für Dichtungen eingesetzten Materialien verwenden.

Nachfolgend sind Ausführungsbeispiele der Erfindung anhand der Zeichnung prinzipmäßig dargestellt.

Es zeigt:
- Fig. 1: eine erste Ausführungsform der erfindungsgemäßen Vorrichtung;
- Fig. 2: eine vergrößerte Darstellung nach der Linie II-II aus Fig. 1;
- Fig. 3: eine perspektivische Ansicht einer zweiten Ausführungsform der erfindungsgemäßen Vorrichtung;
- Fig. 4: eine Darstellung des Kontaktbereichs zwischen der erfindungsgemäßen Vorrichtung und dem abzudichtenden Gegenstand;
- Fig. 5: eine dritte Ausführungsform der erfindungsgemäßen Vorrichtung;
- Fig. 6: eine vergrößerte Darstellung nach der Linie VI aus Fig. 5;
- Fig. 7: eine nicht zu der Erfindung gehörende Ausführungsform der Vorrichtung;
- Fig. 8: eine vergrößerte Darstellung nach der Linie VIII aus Fig. 7;
- Fig. 9: eine vierte Ausführungsform der erfindungsgemäßen Vorrichtung;
- Fig. 10: eine vergrößerte Darstellung nach der Line X aus Fig. 9;
- Fig. 11: eine nicht zu der Erfindung gehörende Ausführungsform der Vorrichtung;
- Fig. 12: eine vergrößerte Darstellung nach der Linie XII aus Fig. 11;
- Fig. 13: eine nicht zu der Erfindung gehörende Alternative zu der Ausführungsform von Fig. 12;
- Fig. 14: eine weitere Darstellung der erfindungsgemäßen Vorrichtung; und
- Fig. 15: verschiedene geometrische Grundformen zur Bildung des wenigstens einen die Steifigkeit des Dichtkörpers verändernden Elements.

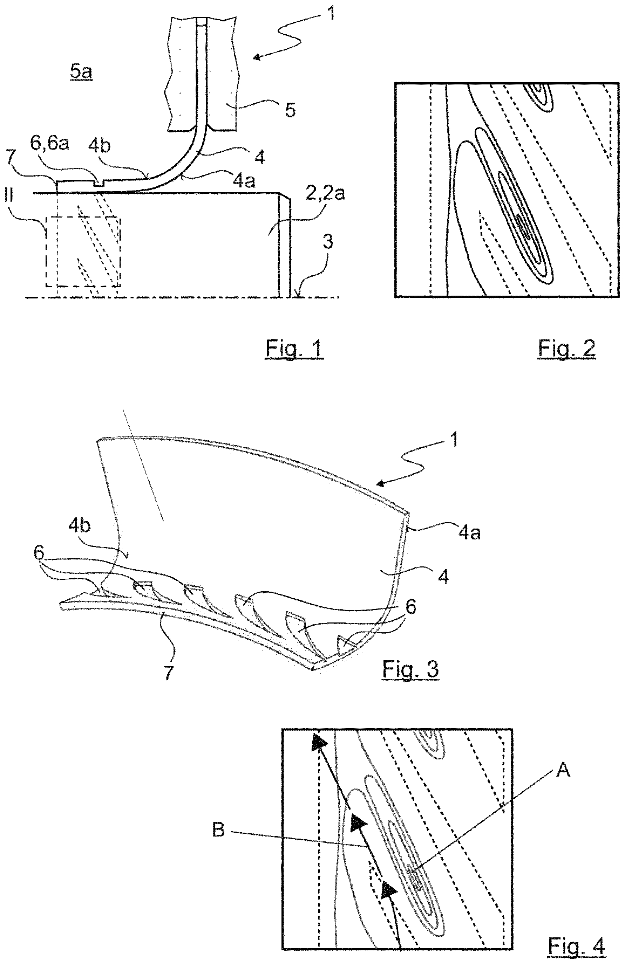

Fig. 1 zeigt eine Vorrichtung 1 zur Abdichtung eines abzudichtenden Gegenstands 2, im vorliegenden Fall einer um eine Längsachse 3 rotierenden Welle 2a. Die Vorrichtung 1 weist einen Dichtkörper 4 auf, der eine dem abzudichtenden Gegenstand 2 zugewandte und diesen teilweise berührende Dichtseite 4a und eine von dem abzudichtenden Gegenstand 2 abgewandte Rückseite 4b aufweist. Der Dichtkörper 4 ist an seinem dem Gegenstand 2 abgewandten Ende in einem nur schematisch angedeuteten Bauteil 5 gehalten. Bei dem Bauteil 5 kann es sich zum Beispiel um ein Gehäuse handeln, in dem die rotierende Welle 2a gelagert ist. Selbstverständlich sind auch andere Einbaumöglichkeiten bzw. Anwendungsarten der Vorrichtung 1 denkbar.

Die in den Figuren 1, 4, 6, 8 und 10 dargestellte manschettenartige Einbausituation der Vorrichtung 1 ist als rein beispielhaft anzusehen und die Vorrichtung 1 kann hinsichtlich der Einbaurichtung sowie der Anordnung derselben gegenüber dem Bauteil 5 und des Gegenstands 2 grundsätzlich auf die unterschiedlichsten Arten eingebaut bzw. angeordnet sein, um die nachfolgend beschriebene Abdichtung zu erreichen. Es sind grundsätzlich alle geometrischen Formen des Dichtkörpers 4 denkbar, bei dem die Umfangskräfte auf den Gegenstand 2 durch eine Aufweitung des Dichtkörpers 4 entstehen.

Wie in Fig. 1 und insbesondere in der perspektivischen Darstellung von Fig. 3 erkennbar ist, weist der Dichtkörper 4 auf der Rückseite 4b wenigstens ein die Steifigkeit des Dichtkörpers 4 veränderndes Element 6 auf. Das die Steifigkeit des Dichtkörpers 4 verändernde Element 6, das nachfolgend der Einfachheit halber teilweise lediglich als Element 6 bezeichnet wird, kann auf verschiedene Arten ausgebildet sein, von denen einige nachfolgend beschrieben werden. In sämtlichen hierin beschriebenen Ausführungsformen der Vorrichtung 1 sind mehrere Elemente 6 vorgesehen. Die Elemente können auch als "Rückenstrukturen" bezeichnet werden, da sie sich auf der Rückseite 4b des Dichtkörpers 4 befinden. Grundsätzlich ist auch eine Ausführungsform denkbar, bei der die Vorrichtung lediglich eines der Elemente 6 aufweist.

Der Bereich des Dichtkörpers 4, der mit dem abzudichtenden Gegenstand 2 in Kontakt ist, erfährt durch die Elemente 6 also Steifigkeitssprünge, die zu einer Beeinflussung der Flächenpressung des Dichtkörpers 4 auf den abzudichtenden Gegenstand 2 und damit zu einer Beeinflussung der Spaltbildung zwischen dem Dichtkörper 4 und dem abzudichtenden Gegenstand 2 führen. Sämtlichen Ausführungsformen ist demnach gemeinsam, dass das Element 6 so ausgebildet ist, dass es die Flächenpressung zwischen dem Dichtkörper 4 und dem abzudichtenden Gegenstand 2 verändert. Über die mit dem abzudichtenden Gegenstand 2 in Kontakt stehende Fläche des Dichtkörpers 4 ergibt sich also eine sich verändernde Flächenpressung. Die Elemente 6 beeinflussen die Flächenpressung des Dichtkörpers 4 auf den abzudichtenden Gegenstand 2 jeweils lokal, so dass in diesem Bereich ein gewisser Keilspalt entsteht bzw. sich bei Rotation der Welle 2a durch die Schleppströmung in Umfangsrichtung derselben ausbildet, durch den ein Fluid, das von der Vorrichtung 1 in einem bestimmten Bereich gehalten werden soll, in diesen Bereich zurückgefördert werden kann. Bei dem Fluid kann es sich zum Beispiel um Öl oder eine andere Flüssigkeit, gegebenenfalls auch um ein Gas handeln. Bei der Darstellung in den Figuren handelt es sich jeweils um einen Bereich links von der Vorrichtung 1. Dieser Bereich bildet beispielsweise den Innenraum 5a des Gehäuses bzw. Bauteils 5. Sämtlichen Ausführungsformen ist außerdem gemeinsam, dass der Dichtkörper 4 auf der Dichtseite 4a im Wesentlichen flach ausgebildet ist. Dies ist nicht zwingend erforderlich und der der Dichtkörper 4 könnte auf der Dichtseite 4a auch gewisse Strukturen aufweisen.

Vorzugsweise besteht der Dichtkörper 4 aus Polytetrafluoräthylen (PTFE). Grundsätzlich könnte das wenigstens eine, die Steifigkeit des Dichtkörpers 4 verändernde Element 6 jedoch auch bei Dichtkörpern 4 eingesetzt werden, die aus anderen Materialien, wie beispielsweise aus Elastomeren, bestehen. Beispielsweise könnte der Dichtkörper 4 auch aus Polyurethan bestehen. Weitere mögliche, aber nicht ausschließliche Werkstoffe bzw. Werkstoffkombinationen sind NBR, FKM, ACM, VQM, PE, PEEK, jeweils auch in Kombinationen und Beschichtungen und/oder mit Füllstoffen, wie z. B. Rußen, Kunststoffen, Silikaten und ähnlichem.

In Fig. 3 ist erkennbar, dass um den Umfang des Dichtkörpers 4 mehrere die Steifigkeit des Dichtkörpers 4 verändernde Elemente 6 verteilt angeordnet sind. Die Anzahl und die Verteilung der Elemente 6 gemäß Fig. 3 ist jedoch als rein beispielhaft anzusehen und kann in Abhängigkeit vom jeweiligen Anwendungsfall auch anders ausgeführt werden.

Des Weiteren sind bei sämtlichen in den Figuren dargestellten Ausführungsformen die Elemente 6 so angeordnet, dass sie einen Abstand von einer dem Innenraum 5a des Bauteils 5 zugewandten Umfangskante 7 des Dichtkörpers 4 aufweisen. Dies ist jedoch nicht zwingend erforderlich und die Elemente 6 könnten gegebenenfalls auch bis zu der Umfangskante 7 des Dichtkörpers 4 verlaufen. Durch den Abstand der Elemente 6 von der Umfangskante 7 wird ein Austreten des Fluids verhindert, da der Dichtkörper 4 im Bereich der Umfangskante 7 gleichmäßig an dem abzudichtenden Gegenstand 2 anliegt.

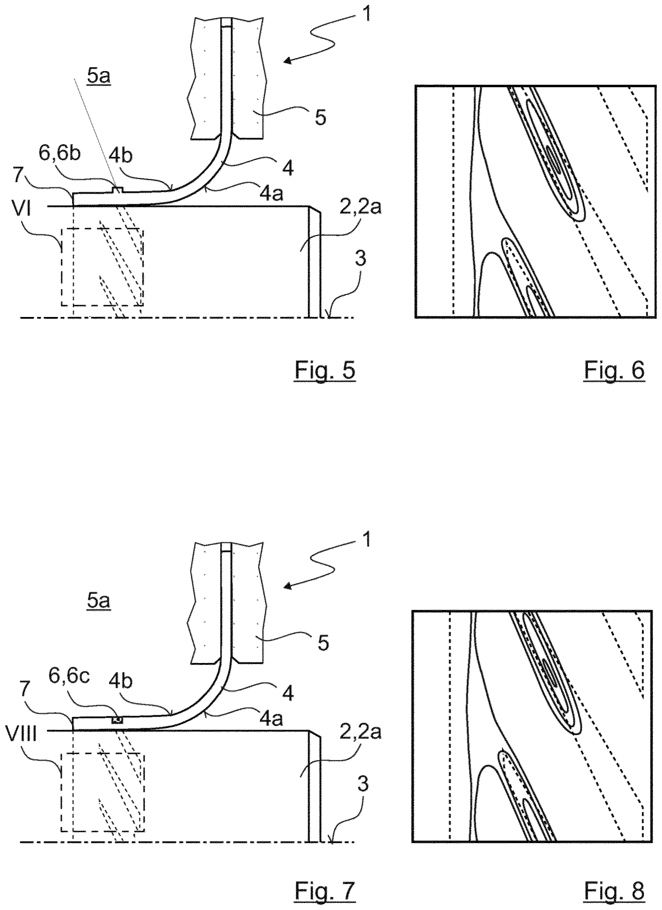

Bei den in den Figuren 1 bis 3 sowie den in den Figuren 4 und 5 dargestellten Ausführungsformen ist das Element 6 durch eine Änderung der Materialstärke des Dichtkörpers 4 ausgebildet.

Bei der Ausführungsform der Figuren 1 bis 3 ist das die Steifigkeit des Dichtkörpers 4 verändernde Element 6 als Vertiefung 6a ausgeführt. Durch die wenigstens eine Vertiefung 6a bzw. die um den Umfang des Dichtkörpers 4 verteilt angeordneten Vertiefungen 6a ergibt sich eine Verringerung der Steifigkeit des Dichtkörpers 4 in diesem Bereich. Durch die Vertiefung 6a und die sich dadurch ergebende Steifigkeitsverringerung im Bereich derselben weist der jeweilige Bereich zwischen den Elementen 6 eine höhere Steifigkeit auf. In nicht dargestellter Weise kann die wenigstens eine Vertiefung 6a einen Höhenverlauf aufweisen, also zum Beispiel bezüglich seiner Höhe oder Tiefe unterschiedliche Niveaus erreichen. Ein solcher Verlauf ist sowohl in Umfangsrichtung als auch in axialer Richtung denkbar.

Vorzugsweise weist die Vertiefung 6a eine Tiefe von 10 bis 90%, insbesondere 30 bis 90 % der Materialstärke des Dichtkörpers 4 auf. Wenn der Dichtkörper 4 also beispielsweise eine Materialstärke von 2 mm aufweist, beträgt die Tiefe der Vertiefung 6a 1 bis 1,6 mm. Das im Bereich der Dichtseite 4a verbleibende Material des Dichtkörpers 4, das mit dem abzudichtenden Gegenstand 2 in Kontakt ist, beträgt demnach in diesem Fall noch 0,4 bis 1 mm. Hierbei handelt es sich selbstverständlich um rein beispielhafte Angaben.

Solche die Elemente 6 bildenden Vertiefungen 6a können bereits bei der Herstellung des Dichtkörpers 4, also beim Urformen desselben, erzeugt werden. Das Urformen des Dichtkörpers 4 kann beispielsweise durch Sintern oder Spritzgießen erfolgen. Alternativ oder zusätzlich können die Elemente 6 auch durch Prägen, Umformen, spanende Bearbeitung oder Laserbearbeitung erzeugt werden.

In Fig. 2 ist die sich durch das Element 6 ergebende Veränderung der Flächenpressung zwischen dem Dichtkörper 4 und dem abzudichtenden Gegenstand 2 mittels Isobaren, also Linien gleichen Drucks bzw. in diesem Fall gleicher Flächenpressung, vergrößert dargestellt. Dabei zeigt Fig. 2 die sich durch das in Fig. 1 dargestellte Element 6 ergebenden Isobaren. Aus den Isobaren ist erkennbar, dass aufgrund des Druckverlaufs zwischen dem Dichtkörper 4 und dem abzudichtenden Gegenstand 2 das austretende bzw. zum Austreten tendierende Fluid in Richtung des Innenraums 5a umgelenkt und zurückgefördert werden kann. Auch der Verlauf der Elemente 6 ist in der Vergrößerung von Fig. 2 zu erkennen. Des Weiteren geht dieser Verlauf auch aus Fig. 1 sowie bei der Ausführungsform der Figuren 1 bis 3 auch aus der perspektivischen Darstellung von Fig. 3 hervor. Es ist zu erkennen, dass das die Steifigkeit des Dichtkörpers 4 verändernde Element 6 sich von der Umfangskante 7 des Dichtkörpers 4 weg verbreitert. Umgekehrt ausgedrückt verjüngt sich das Element 6 bzw. bei der Ausführungsform der Figuren 1 bis 3 die Vertiefung 6a in Richtung zu der Umfangskante 7 hin. Dies ist eine besonders wirkungsvolle Ausführungsform des die Steifigkeit des Dichtkörpers 4 verändernden Elements 6, es sind jedoch auch Ausführungen denkbar, bei denen die beiden seitlichen Ränder des die Steifigkeit des Dichtkörpers 4 verändernden Elements 6 parallel zueinander verlaufen.

Des Weiteren verlaufen die Vertiefungen 6a in der Draufsicht schräg zu der Längsachse 3 der rotierenden Welle 2a, die im vorliegenden Fall auch die Längsachse des Dichtkörpers 4 darstellt. Durch diesen Verlauf der Elemente 6 ergibt sich ein keilförmiger Spalt zwischen dem Dichtkörper 4 und dem abzudichtenden Gegenstand 2, wodurch Fluid zurückgefördert werden kann. Mit anderen Worten wird durch diese Ausführung der Elemente 6 dem Fluidstrom eine Richtung zu der Umfangskante 7 hin gegeben. Gegebenenfalls wäre es auch möglich, einzelne der Elemente 6 entgegengesetzt zu der dargestellten Schrägstellung derselben anzuordnen, so dass die Vorrichtung 1 für zwei unterschiedliche Drehrichtungen der rotierenden Welle 2a eingesetzt werden könnte.

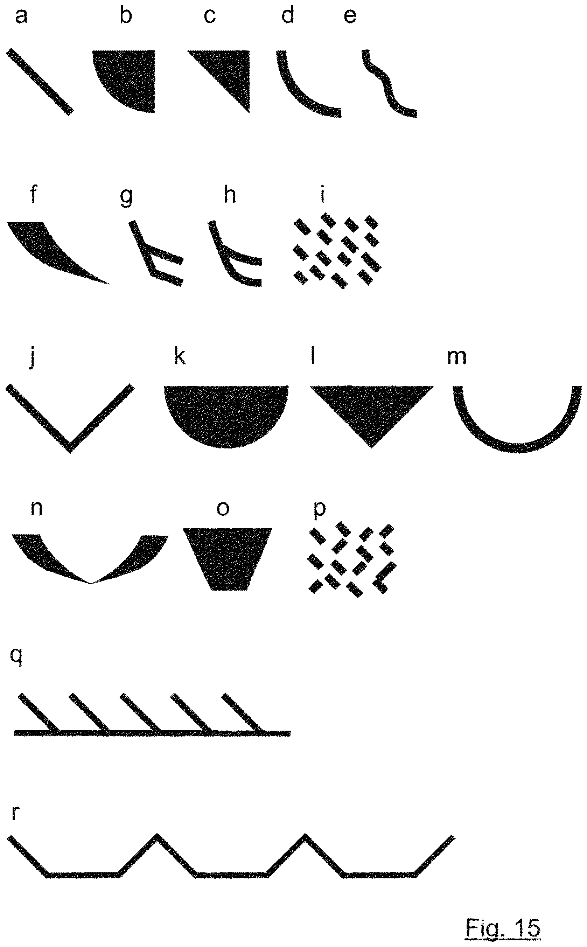

Für bestimmte Anwendungen kann es vorteilhaft sein, wenn das wenigstens eine die Steifigkeit des Dichtkörpers 4 verändernde Element 6 aus mehreren geometrischen Grundformen besteht. Diese können aus einem oder mehreren Schrägen, Bögen, Kreisen oder jedweden denkbaren Formen bestehen. Mögliche aber nicht ausschließliche Geometrieformen sind in Fig. 15 dargestellt. Die Positionen a - d zeigen einfache geometrische Formen wie ein die Steifigkeit des Dichtkörpers 4 veränderndes Element 6 gestaltet sein kann. Die Positionen e - h zeigen die Steifigkeit des Dichtkörpers 4 verändernde Elemente 6, welche aus zusammengesetzte Bögen oder zusammengesetzten Geraden bestehen. Die Position i zeigt die Steifigkeit des Dichtkörpers 4 verändernde Elemente 6, welche mit positiven oder negativen Winkeln bezüglich der Längsachse des Dichtkörpers 4 in der Draufsicht stochastisch verteilt angeordnet sind. Die Positionen a - i sind dabei asymmetrisch bezüglich der Längsachse des Dichtkörpers 4 in der Draufsicht. Denkbar aber nicht ausschließlich sind auch symmetrische die Steifigkeit des Dichtkörpers 4 verändernde Elemente 6, wie in den Positionen j - o dargestellt, welche aus den beispielhaft gezeigten asymmetrischen Elementen zusammengesetzt sein können. Die Position p zeigt die Steifigkeit des Dichtkörpers 4 verändernde Elemente 6, welche mit positiven und negativen Winkeln bezüglich der Längsachse des Dichtkörpers 4 in der Draufsicht stochastisch verteilt angeordnet sind. Denkbar aber nicht ausschließlich sind auch Kombinationen entsprechend der Positionen q und r. Die Elemente 6 können sich überschneiden und aneinanderhängen und aus unterschiedlichsten geometrischen Formen gebildet sein.

Das Verhältnis der Höhe des sich ergebenden Dichtspalts im Vergleich zu dessen Länge in Richtung der Längsachse 3, die von der Länge des jeweiligen Elements 6 in Richtung der Längsachse 3 abhängt, kann sehr gering sein und kann beispielsweise zwischen 1:100 und 1: 10000 betragen. Die Länge des Elements 6 in Richtung der Längsachse 3 kann demnach mehrere mm betragen.

Fig. 4 zeigt den Kontaktbereich zwischen der Vorrichtung 1 bzw. dem Dichtkörper 4 und dem abzudichtenden Gegenstand 2 bzw. der Welle 2a. Durch die oben beschriebenen Rückenstrukturen auf der Rückseite 4b des Dichtkörpers 4 ergibt sich eine ungleichmäßige Pressungsverteilung, welche in Fig. 4 als Isobaren A gekennzeichnet ist. Das durch die Rotation der Welle 2a mitgeschleppte Fluid wird durch die ungleichmäßige Druckverteilung axial umgelenkt und kann in Richtung des abzudichtenden Raumes, in diesem Fall also der Dichtseite gefördert werden, was durch die mit "B" bezeichneten Pfeile dargestellt ist. Hierdurch wird die Abdichtwirkung im dynamischen Zustand, also bei Rotation der Welle 2a, sichergestellt.

Bei der in den Figuren 5 und 6 dargestellten Ausführungsform ist das die Steifigkeit des Dichtkörpers 4 verändernde Element 6 als Erhöhung 6b ausgebildet. Durch die wenigstens eine Erhöhung 6b bzw. durch die um den Umfang des Dichtkörpers 4 verteilt angeordneten Erhöhungen 6b ergibt sich eine Vergrößerung der Steifigkeit des Dichtkörpers 4 in diesem Bereich. Im Falle einer höheren Steifigkeit ergibt sich eine höhere Flächenpressung des Dichtkörpers 4 auf den abzudichtenden Gegenstand 2 und die Rückförderstrukturen entstehen zwischen den Elementen 6. In nicht dargestellter Weise kann die wenigstens eine Erhöhung 6b einen Höhenverlauf aufweisen, also zum Beispiel bezüglich seiner Höhe oder Tiefe unterschiedliche Niveaus erreichen. Ein solcher Verlauf ist sowohl in Umfangsrichtung als auch in axialer Richtung denkbar.

In ähnlicher Weise wie die Vertiefung 6a gemäß der Ausführungsformen der Figuren 1 bis 3 verbreitert sich auch die Erhöhung 6b von der Umfangskante 7 weg. Des Weiteren verlaufen auch die Erhöhungen 6b schräg zu der Längsachse 3 der rotierenden Welle 2a, die auch die Längsachse für den Dichtkörper 4 darstellt.

Vorzugsweise überschreitet die Erhöhung 6b die Materialstärke des Dichtkörpers 4 um 5 bis 100%, insbesondere 25 bis 100 %, so dass die gewünschte Wirkung hinsichtlich der Veränderung der Flächenpressung des Dichtkörpers 4 auf den abzudichtenden Gegenstand 2 erreicht wird. Bei einem Dichtkörper 4 mit einer Materialstärke von 2 mm bedeutet dies, dass die Höhe der Erhöhung 6b 0,5 bis 2,0 mm beträgt. Die Materialstärke des Dichtkörpers 4 im Bereich der Erhöhung 6b beträgt in diesem Fall demnach 2,5 mm bis 4,0 mm. Selbstverständlich sind diese Angaben als rein beispielhaft anzusehen. Denkbar sind auch Überhöhungen, welche die eigentliche Materialstärke des Dichtkörpers 4 übersteigen.

Fig. 6 zeigt ähnlich wie Fig. 2 die Isobaren, welche die Flächenpressung zwischen dem Dichtkörper 4 und dem abzudichtenden Gegenstand 2 anzeigen. In dieser Darstellung ist auch der Verlauf der die Elemente 6 bildenden Erhöhungen 6b zu erkennen.

Die Erhöhungen 6b können, ähnlich wie die Vertiefungen 6a, bereits beim oben beschriebenen Urformen des Dichtkörpers 4 erzeugt werden. Die Erhöhungen 6b könnten auch durch Aufbringen eines zusätzlichen Materials auf den Dichtkörper 4 erzeugt werden.

Bei der in den Figuren 7 und 8 dargestellten, nicht zu der Erfindung gehörenden Vorrichtung 1 ist das wenigstens eine die Steifigkeit des Dichtkörpers 4 verändernde Element 6 durch ein von dem Material des Dichtkörpers 4 unterschiedliches Material 6c gebildet. Im vorliegenden Fall handelt es sich bei dem Material 6c um ein Material mit einer höheren Steifigkeit als das Material des Dichtkörpers 4, so dass sich eine Vergrößerung der Steifigkeit des Dichtkörpers 4 in dem Bereich des Elements 6 ergibt. Dadurch kann eine ähnliche Beeinflussung der Flächenpressung zwischen dem Dichtkörper 4 und dem abzudichtenden Gegenstand 2 wie durch die Erhöhungen 6b erreicht werden.

Zur Einbringung des Materials 6c kann beispielsweise eine Ausnehmung in dem Dichtkörper 4 erzeugt und das Material 6c in dieselbe eingebracht werden. Es ist jedoch auch möglich, das Material 6c bereits bei der Herstellung des Dichtkörpers 4 in denselben einzubringen, beispielsweise mittels Vergießen, Sintern, Vulkanisieren oder einem anderen geeigneten Verfahren. Gegebenenfalls lassen sich auch Fasermaterialien für das Material 6c verwenden, die ebenfalls bereits beim Urformen in denselben eingebracht werden können. In ähnlicher Weise wie bei den Erhöhungen 6b könnte das Material 6c auch durch Einbringen eines zusätzlichen Materials in den Dichtkörper 4 erzeugt werden.

In Fig. 8 sind analog zu Fig. 2 die Isobaren abgebildet, aus denen die Flächenpressung zwischen dem Dichtkörper 4 und dem abzudichtenden Gegenstand 2 sowie der schräg zu der Längsachse 3 und sich von der Umfangskante 7 weg verbreiternde Verlauf der Elemente 6 entnommen werden kann.

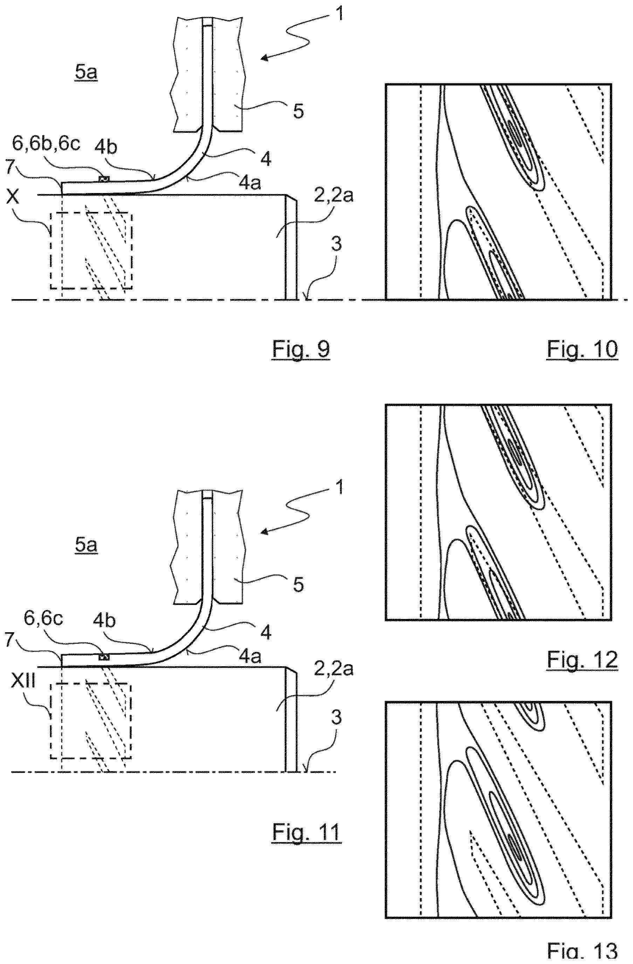

Eine Kombination der Ausführungsformen der Figuren 5 und 6 einerseits und der Figuren 7 und 8 andererseits ist in den Figuren 9 und 10 dargestellt. Dabei ist wiederum das die Steifigkeit des Dichtkörpers 4 verändernde Element 6 durch die Erhöhung 6b gebildet, wobei die Erhöhung 6b in diesem Fall das Material 6c aufweist oder aus dem Material 6c besteht. Dadurch ergibt sich wiederum in dem Bereich des Elements 6 bzw. in dem Bereich der um den Umfang des Dichtkörpers 4 verteilt angeordneten Elemente 6 eine Vergrößerung der Steifigkeit mit der bereits oben beschriebenen Wirkung auf die Flächenpressung zwischen dem Dichtkörper 4 und dem abzudichtenden Gegenstand 2. Durch die Verwendung eines Materials 6c mit einer höheren Steifigkeit als das Grundmaterial des Dichtkörpers 4 kann die Höhe der Erhöhung 6b möglicherweise verringert werden.

In Fig. 10 sind ebenfalls die die Flächenpressung zwischen dem Dichtkörper 4 und dem abzudichtenden Gegenstand 2 darstellenden Isobaren abgebildet und es ist wiederum der Verlauf der Elemente 6, der auch hier schräg zu der Längsachse 3 und sich von der Umfangskante 7 weg verbreiternd ausgeführt ist, erkennbar.

Die in den Figuren 11 bis 13 dargestellte, nicht zu der Erfindung gehörende Vorrichtung 1 ist ähnlich zu derjenigen gemäß der Figuren 7 und 8, da das die Steifigkeit des Dichtkörpers 4 verändernde Element 6 wiederum durch das von dem Material des Dichtkörpers 4 unterschiedliche Material 6c gebildet ist. Dabei kann, je nach verwendetem Material, eine Verringerung oder eine Vergrößerung der Steifigkeit des Dichtkörpers 4 in dem jeweiligen Bereich erreicht werden. Bei Verwendung eines Materials 6c mit einer geringeren Steifigkeit als das Material des Dichtkörpers 4 ergibt sich eine Verringerung der Steifigkeit in dem Bereich des jeweiligen Elements 6. Dagegen ergibt sich bei Verwendung eines Materials 6c mit einer höheren Steifigkeit als das Material des Dichtkörpers 4 eine Erhöhung der Steifigkeit in dem Bereich des jeweiligen Elements 6.

Hierbei zeigt, jeweils mittels der bereits oben beschriebenen Isobaren, Fig. 12 den Fall einer Erhöhung der Steifigkeit und somit einer Erhöhung der Flächenpressung zwischen dem Dichtkörper 4 und dem abzudichtenden Gegenstand 2 und Fig. 13 zeigt den Fall einer Verringerung der Steifigkeit und somit einer Verringerung der Flächenpressung zwischen dem Dichtkörper 4 und dem abzudichtenden Gegenstand 2. Auch bei der Ausführungsform der Figuren 11, 12 und 13 verbreitern sich die Elemente 6 von der Umfangskante 7 weg und sind außerdem schräg zu der Längsachse 3 angeordnet.

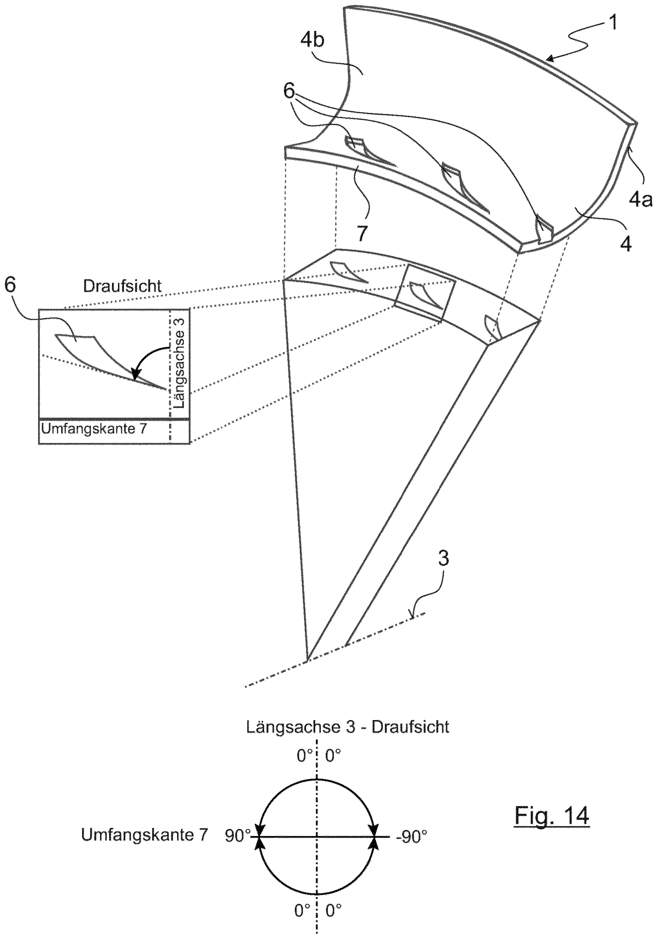

Fig. 14 zeigt die Vorrichtung aus Fig. 3 in einer Darstellung, in der der schräge Verlauf der Vertiefungen 6a zu der Längsachse 3 der rotierenden Welle 2a, die auch die Längsachse des Dichtkörpers 4 bildet, nochmals verdeutlicht ist. Die Draufsicht des Dichtsystems ist dabei so definiert, dass die Umfangskante des Dichtkörpers 4 rechtwinklig zur Längsachse des Dichtkörpers 4 verläuft. Des Weiteren geht aus dieser Figur auch die Definition der oben erläuterten Winkel der Schräge gegenüber der Längsachse des Dichtkörpers 4 hervor. Die Darstellung von Fig. 14 lässt sich selbstverständlich problemlos auf den Fall der Verwendung der Erhöhung 6b als das die Steifigkeit des Dichtkörpers 4 verändernde Element 6 übertragen.

Das wenigstens eine die Steifigkeit des Dichtkörpers 4 verändernde Element 6 verläuft dabei in der Draufsicht vorzugsweise in einem Winkel zwischen 0,1° und 89,9° oder zwischen -89,9° und -0,1° schräg zu der Längsachse des Dichtkörpers 4.

In nicht dargestellter Weise kann wenigstens ein die Steifigkeit des Dichtkörpers 4 veränderndes Element 6 in der Draufsicht mit positivem Winkel schräg zu der Längsachse des Dichtkörpers 4 verlaufen und wenigstens ein die Steifigkeit des Dichtkörpers 4 veränderndes Element 6 kann in der Draufsicht mit negativem Winkel schräg zu der Längsachse des Dichtkörpers entgegengesetzt dazu angeordnet sein.

Des Weiteren ist es vorstellbar, dass das wenigstens eine die Steifigkeit des Dichtkörpers 4 verändernde Element 6 zwei Schrägen aufweist, von denen eine in der Draufsicht einen positiven Winkel gegenüber der Längsachse des Dichtkörpers 4 aufweist und von denen die andere in der Draufsicht einen negativen Winkel gegenüber der Längsachse des Dichtkörpers 4 aufweist.

In den Figuren nicht dargestellte, jedoch gut vorstellbare Ausführungsformen der Vorrichtung 1 sind auch mitdrehende Dichtringe sowie außenabdichtende, also gegenüber dem Bauteil 5 bzw. dem Gehäuse abdichtende Ringe. Eine weitere Ausführungsform könnte axial dichtend gestaltet sein. Eine verbesserte Dichtwirkung durch die indirekte Strukturierung ist auch bei translatorischen Bewegungen denkbar.

Die Dichtkörper 4 können durch unterschiedlichste Fertigungsverfahren hergestellt werden. Bei den urformenden Verfahren bietet sich neben Sintern, Gießen, z.B. Spritzgießen, Vulkanisieren, Belichten, Ätzen und Polymerisieren sowie sämtliche Rapid Prototyping- und additive Verfahren an. Umformend können die Dichtringe geprägt, gestempelt, geschmiedet, tiefgezogen, blasgeformt oder gepresst werden. Zu den möglichen spanenden Fertigungsverfahren zählen Fräsen, Bohren, Lasern, Schneiden, Kleben, Stanzen. Mögliche Fügeverfahren sind Kleben, Laminieren, Plattieren, Löten oder Schweißen.

Das Wirkprinzip der Vorrichtung 1 lässt sich insbesondere durch Wegnahme von Material, Hinzufügen von Material, Umverteilen von Material, z. B. durch Prägen, Verändern von Material, z. B. durch Verstärken, Erweichen, Verwenden von Füllstoffen, Gewebeverstärkung, Schaumstruktur, den Einsatz unterschiedlicher Materialien, z. B. in einem Laminat, und/oder die Einwirkung von äußeren Kräften, z. B. Federn oder Kompressionskörpern, umsetzen.

Die Details der hierin beschriebenen Ausführungsformen des Dichtkörpers 4 können im Prinzip beliebig miteinander kombiniert werden, sofern nicht offensichtliche Gründe gegen eine bestimmte Kombination sprechen. Es wäre demnach auch möglich, an ein und demselben Dichtkörper 4 einen Teil der Elemente 6 als Vertiefungen 6a und einen anderen Teil als Erhöhungen 6b auszuführen. Auch eine Kombination mit dem von dem Material des Dichtkörpers 4 unterschiedlichen Materials 6c wäre denkbar. Die Anzahl, die Anordnung und die Ausführung der Elemente 6 kann für den jeweiligen Anwendungsfall angepasst werden.

## Patentansprüche

1. Vorrichtung (1) zur Abdichtung eines abzudichtenden Gegenstands (2), insbesondere zur Abdichtung einer rotierenden Welle (2a), mit einem Dichtkörper (4), der eine dem abzudichtenden Gegenstand (2) zugewandte Dichtseite (4a) und eine von dem abzudichtenden Gegenstand (2) abgewandte Rückseite (4b) aufweist,
wobei der Dichtkörper (4) auf der Rückseite (4b) wenigstens ein die Steifigkeit des Dichtkörpers (4) veränderndes Element (6) aufweist, das die Flächenpressung zwischen dem Dichtkörper (4) und dem abzudichtenden Gegenstand (2) verändert, und dass das wenigstens eine die Steifigkeit des Dichtkörpers (4) verändernde Element (6) schräg zu einer Längsachse des Dichtkörpers (4) verläuft, wobei
mehrere die Steifigkeit des Dichtkörpers (4) verändernde Elemente (6) um den Umfang des Dichtkörpers (4) verteilt angeordnet sind, wobei die die Steifigkeit des Dichtkörpers (4) verändernden Elemente (6) durch eine Änderung der Materialstärke des Dichtkörpers (4) ausgebildet sind, wobei die die Steifigkeit des Dichtkörpers (4) verändernden Elemente (6) als Vertiefung (6a) oder als Erhöhung (6b) ausgebildet sind, und wobei der Dichtkörper (4) auf der Dichtseite (4a) im Wesentlichen glatt ausgebildet ist,
**dadurch gekennzeichnet, dass**
die die Steifigkeit des Dichtkörpers (4) verändernden Elemente (6) in der Draufsicht in einem Winkel zwischen 0,1° und 89,9° oder zwischen -89,9° und -0,1° schräg zu der Längsachse des Dichtkörpers (4) verlaufen.

2. Vorrichtung nach Anspruch 1,
**dadurch gekennzeichnet, dass**
die die Steifigkeit des Dichtkörpers (4) verändernden Elemente (6) einen Abstand von einer Umfangskante (7) des Dichtkörpers (4) aufweisen.

3. Vorrichtung nach Anspruch 1,
**dadurch gekennzeichnet, dass**
die wenigstens eine Vertiefung (6a) und/oder die wenigstens eine Erhöhung (6b) einen Höhenverlauf aufweist.

4. Vorrichtung nach Anspruch 1 oder 3,
**dadurch gekennzeichnet, dass**
die Vertiefung (6a) eine Tiefe von 10 bis 90%, vorzugsweise 30 bis 90 %, der Materialstärke des Dichtkörpers (4) aufweist, und/oder dass die Erhöhung (6b) die Materialstärke des Dichtkörpers (4) um 5 bis 100%, vorzugsweise 25 bis 100 %, überschreitet.

5. Vorrichtung nach einem der Ansprüche 1 bis 4,
**dadurch gekennzeichnet, dass**
wenigstens ein die Steifigkeit des Dichtkörpers (4) veränderndes Element (6) in der Draufsicht mit positivem Winkel schräg zu der Längsachse des Dichtkörpers (4) verläuft und wenigstens ein die Steifigkeit des Dichtkörpers (4) veränderndes Element (6) in der Draufsicht mit negativem Winkel schräg zu der Längsachse des Dichtkörpers (4) entgegengesetzt dazu angeordnet ist.

6. Vorrichtung nach einem der Ansprüche 1 bis 5,
**dadurch gekennzeichnet, dass**
die die Steifigkeit des Dichtkörpers (4) verändernden Elemente (6) zwei Schrägen aufweisen, von denen eine in der Draufsicht einen positiven Winkel gegenüber der Längsachse des Dichtkörpers (4) aufweist und von denen die andere einen in der Draufsicht negativen Winkel gegenüber der Längsachse des Dichtkörpers (4) aufweist.

7. Vorrichtung nach einem der Ansprüche 1 bis 6,
**dadurch gekennzeichnet, dass**
zumindest eines der um den Umfang des Dichtkörpers (4) verteilt angeordneten, die Steifigkeit des Dichtkörpers (4) verändernden Elemente (6) in der Draufsicht in einer entgegengesetzten Richtung zu den anderen die Steifigkeit des Dichtkörpers (4) verändernden Elementen (6) in der Draufsicht schräg zu der Längsachse des Dichtkörpers (4) verläuft.

8. Vorrichtung nach einem der Ansprüche 1 bis 7,
**dadurch gekennzeichnet, dass**
die die Steifigkeit des Dichtkörpers (4) verändernden Elemente (6) sich von einer Umfangskante (7) des Dichtkörpers (4) weg verbreitern.

## Claims

1. A device (1) for sealing an object (2) to be sealed, in particular for sealing a rotating shaft (2a), having a sealing body (4) which has a sealing side (4a) that faces the object (2) to be sealed, and a rear side (4b) that faces away from the object (2) to be sealed, wherein the sealing body (4) on the rear side (4b) has at least one element (6) which modifies the rigidity of the sealing body (4) and which modifies the surface pressure between the sealing body (4) and the object (2) to be sealed, and in that the at least one element (6) which modifies the rigidity of the sealing body (4) runs obliquely to a longitudinal axis of the sealing body (4), wherein
a plurality of elements (6) which modify the rigidity of the sealing body (4) are disposed so as to be distributed about the circumference of the sealing body (4), wherein the elements (6) which modify the rigidity of the sealing body (4) are configured by a modification of the material thickness of the sealing body (4), wherein the elements (6) which modify the rigidity of the sealing body (4) are configured as a depression (6a) or elevation (6b), and wherein the sealing body (4) on the sealing side (4a) is configured so as to be substantially smooth,
**characterized in that**
the elements (6) which modify the rigidity of the sealing body (4) in the plan view run obliquely at an angle between 0.1° and 89.9°, or between -89.9° and - 0.1°, to the longitudinal axis of the sealing body (4).

2. The device as claimed in claim 1,
**characterized in that**
the elements (6) which modify the rigidity of the sealing body (4) have a spacing from a circumferential edge (7) of the sealing body (4).

3. The device as claimed in claim 1,
**characterized in that**
the at least one depression (6a) and/or the at least one elevation (6b) has a height profile.

4. The device as claimed in claim 1 or 3,
**characterized in that**
the depression (6a) has a depth of 10 to 90%, preferably 30 to 90%, of the material thickness of the sealing body (4), and/or the elevation (6b) exceeds the material thickness of the sealing body (4) by 5 to 100%, preferably 25 to 100%.

5. The device as claimed in one of claims 1 to 4,
**characterized in that**
at least one element (6) which modifies the rigidity of the sealing body (4) in the plan view runs obliquely at a positive angle to the longitudinal axis of the sealing body (4), and at least one element (6) which modifies the rigidity of the sealing body (4) in the plan view is disposed, counter to the former, obliquely at a negative angle to the longitudinal axis of the sealing body (4).

6. The device as claimed in one of claims 1 to 5,
**characterized in that**
the elements (6) which modify the rigidity of the sealing body (4) have two inclines of which one, in the plan view, has a positive angle in relation to the longitudinal axis of the sealing body (4), and of which the other, in the plan view, has a negative angle in relation to the longitudinal axis of the sealing body (4).

7. The device as claimed in one of claims 1 to 6,
**characterized in that**
at least one of the elements (6) which modify the rigidity of the sealing body (4) and which are disposed so as to be distributed about the circumference of the sealing body (4), in the plan view, runs in a direction counter to the other elements (6) which modify the rigidity of the sealing body (4), in the plan view obliquely to the longitudinal axis of the sealing body (4).

8. The device as claimed in one of claims 1 to 7,
**characterized in that**
the elements (6) which modify the rigidity of the sealing body (4) widen away from a circumferential edge (7) of the sealing body (4).

## Revendications

1. Dispositif (1) pour étanchéifier un objet à étanchéifier (2), en particulier pour étanchéifier un arbre rotatif (2a) comprenant un corps d'étanchéité (4) qui présente une face d'étanchéité (4a) tournée vers l'objet à étanchéifier (2) et une face arrière (4b) opposée à l'objet à étanchéifier (2),
dans lequel le corps d'étanchéité (4) présente sur la face arrière (4b) au moins un élément (6) qui modifie la rigidité du corps d'étanchéité (4) et qui modifie la pression superficielle entre le corps d'étanchéité (4) et l'objet à étanchéifier (2), et dans lequel ledit au moins un élément (6) qui modifie la rigidité du corps d'étanchéité (4) s'étend de manière oblique par rapport à un axe longitudinal du corps d'étanchéité (4), dans lequel
plusieurs éléments (6) qui modifient la rigidité du corps d'étanchéité (4) sont disposés de façon répartie autour de la périphérie du corps d'étanchéité (4), dans lequel les éléments (6) qui modifient la rigidité du corps d'étanchéité (4) sont réalisés par une modification de l'épaisseur de matériau du corps d'étanchéité (4), dans lequel les éléments (6) qui modifient la rigidité du corps d'étanchéité (4) sont réalisés sous la forme d'un creux (6a) ou d'une élévation (6b) et dans lequel le corps d'étanchéité (4) est réalisé de manière sensiblement lisse sur la face d'étanchéité (4a),
**caractérisé en ce que** les éléments (6) qui modifient la rigidité du corps d'étanchéité (4) s'étendent dans la vue en élévation selon un angle qui est compris entre 0,1° et 89,9° ou entre -89,9° et -0,1° de manière oblique par rapport à l'axe longitudinal du corps d'étanchéité (4).

2. Dispositif selon la revendication 1, **caractérisé en ce que** les éléments (6) qui modifient la rigidité du corps d'étanchéité (4) présentent une certaine distance par rapport à un bord périphérique (7) du corps d'étanchéité (4).

3. Dispositif selon la revendication 1, **caractérisé en ce que** ledit au moins un creux (6a) et/ou ladite au moins une élévation (6b) présente(nt) une variation de hauteur.

4. Dispositif selon la revendication 1 ou 3, **caractérisé en ce que** le creux (6a) présente une profondeur dont la grandeur est comprise entre 10 % et 90 %, de préférence entre 30 % et 90 % de l'épaisseur de matériau du corps d'étanchéité (4), et/ou **en ce que** l'élévation (6b) dépasse l'épaisseur de matériau du corps d'étanchéité (4) de 5 % à 100 %, de préférence de 25 % à 100 %.

5. Dispositif selon l'une quelconque des revendications 1 à 4, **caractérisé en ce qu'**au moins un élément (6) qui modifie la rigidité du corps d'étanchéité (4) s'étend dans la vue en élévation avec un angle positif de manière oblique par rapport à l'axe longitudinal du corps d'étanchéité (4) et au moins un élément (6) qui modifie la rigidité du corps d'étanchéité (4) est disposé dans la vue en élévation à l'opposé de celui-ci avec un angle négatif de manière oblique par rapport à l'axe longitudinal du corps d'étanchéité (4).

6. Dispositif selon l'une quelconque des revendications 1 à 5, **caractérisé en ce que** les éléments (6) qui modifient la rigidité du corps d'étanchéité (4) présentent deux chanfreins, dont l'un présente dans la vue en élévation un angle positif par rapport à l'axe longitudinal du corps d'étanchéité (4) et dont l'autre présente un angle négatif dans la vue en élévation par rapport à l'axe longitudinal du corps d'étanchéité (4).

7. Dispositif selon l'une quelconque des revendications 1 à 6, **caractérisé en ce qu'**au moins l'un des éléments (6) qui modifient la rigidité du corps d'étanchéité (4), qui sont disposés de façon répartie autour de la périphérie du corps d'étanchéité (4), s'étend dans la vue en élévation dans une direction opposée par rapport aux autres éléments (6) qui modifient la rigidité du corps d'étanchéité (4) dans la vue en élévation de manière oblique par rapport à l'axe longitudinal du corps d'étanchéité (4).

8. Dispositif selon l'une quelconque des revendications 1 à 7, **caractérisé en ce que** les éléments (6) qui modifient la rigidité du corps d'étanchéité (4) s'élargissent à l'écart d'un bord périphérique (7) du corps d'étanchéité (4).
